# EUROPÄISCHE PATENTANMELDUNG

(11) **EP 1 106 233 A1**
(43) Veröffentlichungstag der Anmeldung: **13.06.2001**
(21) Anmeldenummer: 00125463.0
(22) Anmeldetag: 21.11.2000
(51) Int. Cl.: B01D 53/04

(54) **Verfahren zur Adsorption von Ethylen**

(30) Priorität: 30.11.1999 DE 19957509
(71) Anmelder: Degussa AG, 40474 Düsseldorf (DE)
(72) Erfinder: Sextl, Elfriede, Dr., 63826 Geiselbach (DE); Heindl, Frank, 63517 Rodenbach (DE); Gaitzsch, Thomas, Dr., 61118 Bad Vilbel (DE); Full, Roland, Dr., 63768 Hösbach (DE)

(57) **Zusammenfassung**

Ethylen wird an einen organophilen Zeolith adsorbiert. Das Verfahren kann bei der Lagerung von Obst eingesetzt werden.

## Beschreibung

Die Erfindung betrifft ein Verfahren zur Reduzierung von Ethylen in Gasen oder Gasgemischen.

Verderbliches Obst, Früchte und Gemüse, sowie Pflanzen, wie Pilze, Blumen und dergleichen, erfordern bei ihrer Lagerung und ihrem Transport spezielle Umgebungsbedingungen um den fortschreitenden Reifeprozeß zu minimieren beziehungsweise den Fäulnisvorgang zu verhindern.

Verantwortlich für beschleunigt ablaufende Reife- beziehungsweise Fäulnisprozesse insbesondere bei klimakterischen Früchten und Gemüse ist unter anderem das bei diesen Vorgängen gebildete Ethylen. Zur Minimierung der Ethylenbildung werden die eingelagerten oder transportierten verderblichen Güter deshalb in der Regel gekühlt. Oft wird innerhalb der Lager- oder Transportbehälter zusätzlich durch verschiedene Maßnahmen eine bestimmte Atmosphärenzusammensetzung erzeugt, indem man beispielsweise eine bestimmte Luftfeuchtigkeit und/oder einen bestimmten reduzierter Sauerstoffgehalt einstellt.

Diese Maßnahmen (Kühlung und CA (Controlled Atmosphere)) verlangsamen den pflanzlichen Stoffwechsel und führen so zu einer längeren Haltbarkeit.

Es ist bekannt, verschiedene Verfahren zur Entfernung von Ethylen aus der Lager- beziehungsweise Transportraumatmosphäre zu verwenden. Dies sind zum Beispiel einfache Adsorptions- oder Oxidations-Verfahren, die zum Beispiel katalytisch oder mittels thermischen Verbrennung durchgeführt werden können. Dabei wird nachteiligerweise bei den einfachen Adsorptionsverfahren das Adsorptionsmittel gesättigt und muß im Anschluß unter Entsorgungs- oder Regenerations-aufwand, Transport- und Verpackungskosten weiterverarbeitet werden. Die oxidativen Verfahren sind energieintensiv und technisch aufwendig.

Es ist bekannt, die Haltbarkeit von Früchten, Obst, Gemüse, Pflanzen etc. dadurch zu verbessern, daß man das in den Lagerbehälter enthaltene Ethylen mittels Zeolith adsorbiert (EP-A 0 417 811, JP 0 527 326, NL 1 000 595-6).

Die bekannten Verfahren weisen den Nachteil auf, daß die eingesetzten Zeolithe hydrophil sind. Sie nehmen Wasserdampf aus dem Gasgemisch, das den Raum füllt, auf. Dadurch wird die Kapazität in bezug auf die Adsorption von Ethylen beeinträchtigt.

Weiterhin wird durch die Adsorption von Wasserdampf der Wassergehalt des Gasgemisches reduziert, wodurch der Reifeprozeß unerwünscht beschleunigt wird.

Gegenstand der Erfindung ist ein Verfahren zur Reduzierung von Ethylen in Gasen und/oder Gasgemischen mittels eines Adsorptionsmittel, welches dadurch gekennzeichnet ist, daß als Adsorptionsmittel ein organophiler Zeolith eingesetzt wird.

Der organophile Zeolith kann sowohl pulverförmig als auch verformt eingesetzt werden.

Der organophile Zeolith kann mit den Metallen Kupfer und/oder Silber imprägniert sein. Er kann ein Verhältnis siO₂/Al₂O₃ zwischen 30 und 1.000 aufweisen.

Der Zeolith kann ein Zeolith von Struktur FAU, MFI oder MOR sein. In einer bevorzugten Ausführungsform kann der Zeolith ein Formkörper mit einem Bindemittelgehalt von 5 bis 50 Gewichtsprozent sein. Der Metallgehalt der imprägnierten Zeolithen kann zwischen 0,1 und 20 Gew.-% betragen. Die Metalle Kupfer und/oder Silber können sowohl in elementarer als auch in ionischer Form auf dem Zeolithen vorliegen.

Die eingesetzten Zeolithe können vom Strukturtyp FAU, MFI oder MOR sein. Definition und Beschreibung dieser Strukturtypen finden sich in W.M. Meier, D.H. Olson: Atlas of Zeolithe Structures, 3^{rd} revised ed., Butterworth-Heinemann, London 1992.

Die Herstellung aluminiumarmer, hydrophober Zeolithe, die diesen Strukturtypen zuzurechnen sind, ist in der Literatur beschrieben:
- Typ Faujasit (FAU):: J. Scherzer in T.E. Whyte, Jr., R.A. Dalla Betta, R.T.K. Baker (eds): Catalytic Materials (ACS Symposium Series 248), American Chemical Society, Washington, D.C. 1984, p. 157; US-Patentschrift 5,316,993.
- Typ ZSM-5 (MFI):: P.A. Jacobs, J.A. Martens: Synthesis of High-Silica Aluminosilicate Zeolites (Stud. Surf. Sci. Catal. 33), Elsevier, Amsterdam 1987.
- Typ Mordenit (MOR):: N.Y. Chen, J.Phys. Chem 80 (1976) 60-64; M.M. Olken, J.M. Garces in R. von Ballmoos, J.B. Higgins, M.M.J. Treacy (eds.): Proceedings from the Ninth International Zeolite Conference, Butter-worth-Heinemann, Boston 1993, p. 559.

In einer bevorzugten Ausführungsform der Erfindung kann als Zeolith ein dealuminierter Zeolith Y als geformter Körper eingesetzt werden, wie er in der US-A 5,316,993 beschrieben wird. Das Verhältnis SiO₂/Al₂O₃ kann bevorzugt 50 bis 1.000 und insbesondere 100 bis 300 betragen.

Der Zeolith kann als Formkörper mit einem Bindemittelgehalt von 5 bis 5o % eingesetzt werden.

Als Bindemittel können SiO₂, Aluminiumoxide, Clay-Mineralien, wie Bentonite, Kaoline, Sepiolite oder Attapulgite sowie alle in dem Dokument US-A 5,316,993 genannten Bindemittel eingesetzt werden.

Die Imprägnierung mit Kupfer und/oder Silber kann nach den üblichen Methoden mit Salzen der Metalle vorgenommen werden. Derartige Methoden sind beschrieben beispielsweise in J. Haber, J.H. Block, B. Delmon, Pure & Appl. Chem., 67, (1995), 1257-1306.

Der Metallgehalt der imprägnierten Zeolith-Formkörper kann zwischen 0,1 und 20 Prozent, bevorzugt zwischen 1 und 10 Massenprozent betragen. Nach der Imprägnierung können die Metalle entweder im ionischen Zustand belassen oder mittels bekannter Verfahrensweisen, beispielsweise durch Erhitzen unter Formiergas, Wasserstoff oder Formaldehyd teilweise oder vollständig zu den Elementen reduziert werden. Dementsprechend können die Metalle sowohl in elementarer als auch ionischer Form auf dem zeolithischen Träger vorliegen, wobei auch beide Metalle gleichzeitig Verwendung finden können.

Als organophile Zeolithe können hydrophobe siliciumreiche Zeolithe und/oder dealuminierte Zeolithe eingesetzt werden. Geeignet sind u.a. siliziumreiche Y-Zeolithe (FAU-Struktur, ZSM-5 Typen (MFI-Struktur) oder Mordenite. In einer Ausführungsform der Erfindung können Zeolithe des Typs WESSALITH® DAY und/oder WESSALITH® DAZ eingesetzt werden.

Die Zeolithe können im Zeolithgitter ein molares SiO₂/Al₂O₃ größer 80 besitzen und können im Zeolithgitter zur Verbesserung der adsorptiven, beziehungsweise desorptiven Eigenschaften mit einem oder mehreren Nebengruppenelementen (speziell Edelmetallen, Kupfer, Zink) beladen sein. Dabei kann das Element sowohl in ionogener als auch in reduzierter (elementarer) Form vorliegen. Auch Kombinationen unterschiedlicher Zeo-lithtypen, die jeweils in metallbeladenener und/oder in unbeladener Form vorliegen, können zum Einsatz kommen.

Das erfindungsgemäße Verfahren kann mit allen bekannten Vorrichtungen zur Adsorption von Ethylen, die ein Adsorptionsmittel verwenden, durchgeführt werden.

Desgleichen kann das erfindungsgemäße Verfahren mit allen bekannten Adsorptions- beziehungsweise Desorptions-Vorrichtungen, die im Bereich des Lagerns und Transportierens von Obst, Früchten, Pflanzen etc. eingesetzt werden, durchgeführt werden.

Bei dem erfindungsgemäßen Verfahren kann der Zeolith in einem Rotationsadsorber eingebracht sein. Dabei kann ein Rotationsadsorber mit Wabenstruktur, in die das Zeolithpulver eingebracht wird, eingesetzt werden. Der Rotationsadsorber kann mehrere Kammern aufweisen.

Dieses Konzept kann beispielsweise durch Verwendung von mit Adsorbens imprägnierten Rotationsrädern (Träger in Waben-körperstruktur; Beispiele Fa. NICHIAS; TOYOBO) realisiert werden. Weiterhin sind parallel geschaltete statische Adsorber, die wechselweise adsorbieren und desorbieren anwendbar. Auch mit Adsorbensformkörpern gefüllte und segmentierte, rotierende Trommeln sind denkbar (Beispiel Fa. Eisenmann).

In einer Ausführungsform der Erfindung kann das Gas oder Gasgemisch konditioniert werden. So kann eine definierte Entfeuchtung vor dem Kontakt mit dem organiphilen Adsorptionsmittel für das Ethylen durchgeführt werden. Dies kann beispielsweise mittels Kondensation und anschließender Erwärmung oder Führen über hydrophiles Adsorptionsmittel wie zum Beispiel einen Zeolith A geschehen.

Nach dem Passieren des organophilen Adsorptionsmittels kann das Gas bezeihungsweise Gasgemisch beispielsweise mittels Führen durch ein Wasserbett oder einen Wäscher befeuchtet werden.

Die relative Luftfeuchtigkeit kann beispielsweise durch Erwärmen des Gases oder Gasgemisches abgesenkt werden.

Ein weiterer Gegenstand der Erfindung ist ein Verfahren zum Lagern und Transportieren von leicht verderblichen Früchten, Pflanzen und Gemüse, wobei die Lagerung und der Transport in geschlossenen oder nahezu geschlossenen Räumen stattfindet, welches dadurch gekennzeichnet ist, daß das in den Räumen gebildete Ethylen mittels eines oder mehrerer organophiler Zeolithe adsorbiert wird.

Das adsorbierte Ethylen kann leicht wieder desorbiert werden.

Die Desorption kann durch Spülen mit jedem beliebigen ethylenfreien Gas oder Gasgemisch erzielt werden. Insbesondere kann Frischluft, wie Luft aus der Umgebung, kalt oder gegebenenfalls erwärmt, beispielsweise bis max. 200 C° erwärmt, eingesetzt werden.

Das erfindungsgemäße Verfahren kann in beliebigen bekannten Vorrichtungen zur Adsorption von organischen Gasen und Dämpfen durchgeführt werden. Dabei sollte bevorzugterweise eine Rückführung des von Ethylen befreiten Gases oder Gasgemisches in dem Raum oder Behälter gewährleistet sein.

Die Desorption kann in bekannten Vorrichtungen im Gleichoder bevorzugt im Gegenstrom durchgeführt werden. Das Ethylen kann dabei in die Umgebungsluft geführt oder katalytisch oder thermisch verbrannt werden.

Die bekannten Vorrichtungen umfassen Festbett und Rotationsadsorber. Sie sind bekannt aus W. Otten et al. Einsatzmöglichkeiten hydrophober Zeolithe in dem Adsorptionstechnik Chem. Ing. Techn. 64 (1992) Nr. 10, 915-925.

Das erfindungsgemäße Verfahren zeigt die folgenden Vorteile:

Erfindungsgemäß wird durch das Adsorptionsmittel nur minimal Wasserdampf aufgenommen. Dadurch wird der Wasserdampfgehalt des Gasgemisches kaum negativ beeinflußt. Der Reifeprozeß des Obstes wird gehemmt.

Die Gesamtzusammensetzung des Gases oder Gasgemisches wird erfindungsgemäß kaum beeinträchtigt.

Das erfindungsgemäße Verfahren weist eine hohe Adsorptionskapazität in bezug auf Ethylen selbst bei niedrigen Konzentrationen auf.

Ein weiterer Vorteil ist, daß das adsorbierte Ethylen auf wirtschaftliche Weise quantitativ desorbiert werden kann.

Damit ist eine hohe Arbeitskapazität gewährleistet.

Auf Grund der guten Desorbierbarkeit des erfindungsgemäß eingesetzten Zeolithen ist eine lange Standzeit sichergestellt.

### Beispiele:

Beladungsversuche mit Ethylen

| Zeolith | Ethylen-konz. *(g/m³) | Beladung (Ethylen g/100g Zeolith) | |
|---|---|---|---|
| | | 15°C | 20°C |
| WESSALITH® DAZ-Fromkörper | 5 | 0,85 | 0,68 |
| Silberhaltige WESSALITH® DAY-Fromkörper | 5 | 0,41 | 0,34 |
| WESSALITH® DAY-Fromkörper | 5 | 0,53 | 0,42 |
| WESSALITH® DAY-Fromkörper imprägniert mit 2 Gew.-% KJ | 5 | 0,87 | 0,63 |

WESSALITH® DAY und WESSALITH® DAZ sind hydrophobe Zeolithe, die die folgenden Eingenschaften aufweisen:

| | **WESSALITH® DAY** | **WESSALITH® DAZ** |
|---|---|---|
| Struktur | Y-Zeolith (FAU) | Pentasil (MFI) |
| SiO₂/Al₂O₃-Verhältnis | >200 | >1.000 |
| Porenweite | 0,8nm | 0,6nm |
| | | |
| **Adsorptionsdaten (aus Luft)** | | |
| Toluol p/pₒ=0,01 | 14 g/100 g | - |
| Ethylacetat p/pₒ=0,01 | 15 g/100 g | 9 g/100 g |
| Wasser p/pₒ=0,70 | 5 g/100 g | 3 g/100 g |
| | | |
| **Lieferformen** | | |
| Vollzylinder (Durchmesser) | 2 mm; 4 mm | 2 mm |
| Hohlzylinder (Außen-/Innendurchmesser) | 6/3 mm | 7/5 mm |
| Pulver | ja | ja |

## Patentansprüche

1. Verfahren zur Adsorption von Ethylen aus Gasen und/oder Gasgemischen an einem Adsorptionsmittel, dadurch gekennzeichnet, daß als Adsorptionsmittel ein organophiler Zeolith eingesetzt wird.

2. Verfahren nach Anspruch 1, dadurch gekennzeichnet, daß als Zeolith der Zeolith WESSALITH® DAZ und/oder WESSALITH® DAY eingesetzt wird.

3. Verfahren zum Lagern und Transportieren von leicht verderblichen Früchten, Pflanzen und Gemüsen, wobei die Lagerung und der Transport in nahezu geschlossenen oder geschlossenen Räumen stattfindet, dadurch gekennzeichnet, daß das in dem Raum gebildete Ethylen mittels eines oder mehrerer organophiler Zeolithe adsorbiert wird.

4. Verfahren gemäß Ansprüchen 1 bis 3, dadurch gekennzeichnet, daß der Zeolith in einem Rotationsadsorber eingebracht ist.

5. Verfahren gemäß Anspruch 4, dadurch gekennzeichnet, daß der Rotationsadsorber eine Wabenstruktur aufweist, in die das Zeolithpulver eingebracht ist.

6. Verfahren gemäß Anspruch 4, dadurch gekennzeichnet, daß der Rotationsadsorber verschiedene Kammern aufweist.
